# EUROPEAN PATENT APPLICATION

(11) **EP 4 477 494 A1**
(43) Date of publication of application: **18.12.2024**
(21) Application number: 23178838.1
(22) Date of filing: 13.06.2023
(51) Int. Cl.: B62B 9/22

(54) **STROLLER ROLLER**

(71) Applicant: Cocos, Marta, 11000 Belgrade (RS)
(72) Inventor: Cocos, Marta, 11000 Belgrade (RS)
(74) Representative: Plavsa & Plavsa D.O.O

(57) **Abstract**

It is known that, unlike outdoor surfaces, indoor flat surfaces do not provide the desired "bumpy ride" for the baby in the stroller. For that reason it is much more difficult to put the baby asleep when being driven in the stroller over such even indoor surface. Although the creation of artificial bumps on indoor surfaces has been already proposed, a stroller roller (1) according to the invention solves the said problem in most efficient way. It comprises at least two rows of parallel transversal bars (2) placed at different distances. The stroller roller (1) further comprises at least three parallel rows of at least two frontally connected stiff elongated base elements (3) perpendicular to the transversal bars (2). The both ends of each transversal bar (2) are detachably connected with two base elements (3), each of which belongs to a different row of the base elements (3). The user can roll baby's stroller back and forth over the transversal bars (2) of the stroller roller (1) until the baby falls asleep. It can be easily removed and put aside when not in use, and it is also travel friendly.

## Description

### Field of Invention

The present invention relates to the technical field of accessories or details specially adapted for baby carriages or perambulators, and in particular to a stroller roller intended for putting babies and toddlers asleep faster and easier.

### Background of Invention

Putting babies asleep still remains one of the biggest challenges of parenthood across the world! Hours and hours are spent every day by parents in attempts of putting their young ones asleep. Yet there is surprisingly little help offered to them currently. Although there are a number of products designed to help babies fall asleep, they are usually in form of a chair, rocker or cradle. Such products are rather expensive and therefore not available for many people. In addition, they are bulky and heavy. Therefore it is often almost impossible for them to be taken with the users, and they are certainly not travel-friendly.

It is well known that babies easily fall asleep while being driven in strollers moving over uneven surfaces, i.e. surfaces having bumps, such as different outdoor paths. During such ride, a stroller moves around its longitudinal axis (i.e. left and right) and around its transversal axis (i.e. up and down). Such complex movement of the stroller is very beneficial for putting babies and toddlers asleep. However, indoor surfaces are mostly smooth and even and without any bumps. Unlike outdoor surfaces, indoor surfaces do not provide for the above mentioned complex movement of the stroller. For that reason it is much more difficult to put baby asleep when being driven in the stroller over such smooth and even indoor surface.

In order to solve this problem several different products for creating artificial bumps on indoor floors have been already proposed. They can be removed and put aside more or less easily when not in use.

One such product worth mentioning is marketed under the commercial name "Sleepy bump". Even though the stroller roller has almost no resemblance to Sleepy bump, we wanted to mention this product because it does operate on the same principle: to create bumps on the floor surface over which the stroller can be rolled front and back. The said product can be found on the following address: https://www.amazon.com/Stroller-Rocker-Put-Anywhere-Anytime-Burgundy/dp/B09NPF4BFX/ref=sr 1 5?crid=MHUVT6IYUOB5&keywords=put%2Bbaby%2B to%2Bsleep&qid=1666612603&qu=evJxc2MiQil0Ljc1liwicXNhljoiMy41NilsInFzcCl6ljluMTMif Q%3D%3D&sprefix=put%2Bbaby%2Bto%2Bsleep%2Caps%2C232&sr=8-5&th=1

An advantage of the stroller roller comparing to Sleepy bump is that the stroller roller creates a longer bumpy surface onto which the stroller can be driven over. Also the bumps of the stroller roller are positioned so that they meet stroller's wheels at different moments. In that way the stroller roller creates a more realistic experience of bumpy ride for the baby.

### Summary of Invention

The stroller roller is an upgrade from a product marketed under the commercial name "Truckalica" that our company started selling at the beginning of 2023. Truckalica is a wood-based product that essentially comprises two rows of parallel wooden bars interconnected with three parallel ropes, wherein the wooden bars are positioned at different distances. More details about the product can be found on the following address: https://ananas.rs/proizvod/truckalica-pomoc-pri-uspavliivaniu-beba-sarena/410229

However, a major issue that our customers reported was that Truckalica was shifting under the stroller. Even though the wooden bars have non-slip silicon-like pads on the lower side facing the floor, a certain movement thereof under the stroller's wheels was still present, because the ropes lack necessary stiffness. This can be very irritating for the parents who then need to readjust the product every little while.

To address this issue we started testing other materials and a different ways to connect the bars. Finally this problem has been solved with our new invention - the stroller roller. The stroller roller is an innovative solution for putting babies and toddlers asleep faster and easier. It is a set of plastic components which, when assembled and laid down on the floor, create an uneven, i.e. bumpy surface. The user rolls baby's stroller back and forth over this bumpy surface, so the baby experiences a bumpy ride very similar to the one that puts babies asleep while being driven in the stroller outdoors. Such "bumpy ride" effectively puts young ones asleep. It takes up less space than known devices and is also travel-friendly. When not in use, it can be disassembled and put in an appropriate container such as a box, which prevents loss of the components and can be easily taken with the user.

Besides the above mentioned advantages it is worth mentioning that the new materials we selected (Polyvinyl Chloride - PVC) have much better performance, when it comes to stability, compared to the wooden bars with silicon-like pads on the bottom. Another improvement in the design is that instead of the ropes, a row of plastic base (longitudinal) elements connects the transversal bars. These base elements (made of Polypropylene - PP) provide additional support and stability to the transversal bars when the stroller wheels cross over them. Finally, we would like to mention that the new design allows much faster and cheaper production. This means a lot in the terms of increasing productivity and upscaling.

The stroller roller in accordance with the invention comprises at least two rows of parallel transversal bars placed at different distances. The stroller roller further comprises at least three parallel rows of at least two frontally connected stiff elongated base elements perpendicular to the transversal bars. The both ends of each transversal bar are detachably connected with two base elements, each of which belongs to a different row of the base elements. The detachable connection between the transversal bars and the base elements is the form-fit connection. Such type of detachable connection enables both fast and easy assembly of the components of the stroller roller and disassembly thereof. Other types of detachable connection are also possible without departing from the scope of the invention.

In one preferred embodiment of the invention, each transversal bar has got a through-hole at each end, while each base element has got at least three bulges, preferably six, on its upper side. Two of the bulges are located at the ends of the base element. Form-fit connection between the transversal bars and the base elements is formed by mutual engagement of the through-holes and the bulges. The shape of the bulges is preferably approximately cubical or cuboid, while the shape of the through-holes is complementary to the shape of the bulges. The through-holes preferably have size L × W: 10mm × 10mm, but different dimensions are also possible.

In another preferred embodiment of the invention, the base element has two groups of two adjacent bulges each. One of the said groups is located at one end of the base element and the other approximately in the middle of the base element. The base element further has two remaining bulges on its remaining part. One of the remaining bulges is located on at the very other end of the base element. The remaining end bulge is shorter than all other ones, wherein the length of the remaining end bulge is only a half of the length of all other ones in the direction along the base element.

In another preferred embodiment of the invention, the stroller roller further comprises at least one connecting part having one through-hole approximately in the middle thereof. The connecting part is shorter than the base element and the connecting part is placed on the upper side of two adjoining base elements of one row of the base elements in such way that the adjoining remaining end bulges of the said base elements fit in the through-hole of the connecting part, thereby forming a row two frontally connected base elements.

In another preferred embodiment of the invention, one transversal bar is placed on the upper side of two adjoining base elements of one row of the base elements in such way that the adjoining remaining end bulges of the said base elements fit in the through-hole of the connecting part, thereby forming a row two frontally connected base elements.

In another preferred embodiment of the invention, the bottom of the transversal bar is a flat surface and the upper side thereof is shaped as a cut out of a circle which rises in the very middle thereof, while each transversal bar has a cut-out, preferably about 30mm long at the lower side of the both ends thereof. Each transversal bar preferably has the following dimensions L × W × H: 350mm × 30mm × 8mm.

In another preferred embodiment of the invention, each base element is shaped as a flat, thin and elongated cuboid element, which preferably has the following dimensions L × W × H: 350mm × 30mm × 4mm. Each base element has six cuboid bulges protruding upwards, wherein five of them are having dimensions L × W × H: 10mm × 10mm × 8mm. The remaining end bulge, which is located on the one end of the base element, preferably right on the edge thereof, is having smaller size compared with the remaining bulges (L × W × H: 5mm × 10mm × 8mm),

In another preferred embodiment of the invention, the connecting part is shaped as a flat and thin cuboid element, which preferably has the following dimensions: L × W × H: 28mm × 58mm × 4mm.

It should be stressed that different shapes and dimensions of the said components are also possible without departing from the scope of the invention. It is also possible that the transversal bars and/or the base elements have non-slip silicon pads on the lower side facing the floor, although it does not contribute significantly to the stability of the overall construction.

In yet another preferred embodiment of the invention, the base elements are made of polypropylene (PP), preferably recycled PP. In yet another preferred embodiment of the invention, the transversal bars are made of polyvinyl chloride (PVC). In yet another preferred embodiment of the invention, the connecting part is also made of polyvinyl chloride (PVC). Nevertheless, it is also possible to use different suitable materials for the components of the stroller roller.

In another preferred embodiment of the invention, the stroller roller preferably comprises a set of eleven transversal bars, six base elements and one connecting part. Of course, a different number of the components is also possible without departing from the scope of the invention, e.g. the stroller roller intended for the stroller for twins, which is wider, can comprise three rows of the parallel transversal bars and four rows of the elongated base elements. Also, in case of shorter base elements, their number in the one row could be three or more instead of two as preferred. In addition, it is possible to omit the connecting part or, on the contrary, to provide two of them.

Before using the stroller roller it is necessary to assemble it on the floor. Firstly the user places the base elements in three parallel rows of two each. Then he/she puts the transversal bars on the base elements, wherein each transversal bar connects two appropriate base elements. It doesn't matter how the transversal bars are being arranged except for the one transversal bar intended for connecting two base elements together, which must be placed on the bulges at the contact point of two base elements of two different rows. Next he/she places the connecting part on the remaining two base elements which are not already connected by any of the transversal bars. It should be noted that the sequence of steps for assembling the stroller roller may vary. After finishing the assembly of the stroller roller the user can roll baby's stroller back and forth over the transversal bars until the baby falls asleep, wherein driving should be light and constant.

It should be understood that all above discussed features and achievements of the present invention are not intended to limit the scope of the present disclosure and that any equivalent changes or modifications of the present disclosure can be made without departing from the scope of the appended claims.

### Brief Description of Drawings

Further advantages, features, characteristics and aspects of the present invention will become apparent from the following description of the preferred embodiments with reference to the drawings, wherein:
Fig. 1 is a perspective view illustrating an embodiment of the stroller roller according to the present invention.
Fig. 2 is a plan view illustrating the stroller roller of Fig. 1.
Fig. 3 is a perspective view illustrating the transversal bar of the stroller roller viewed from below.
Fig. 4 is a perspective view illustrating the base element of the stroller roller viewed from above.

### Detailed Description of the Proffered Embodiments

The following detailed description of the embodiments of the present invention, as represented in the figures, is not intended to limit the scope of the present invention as claimed, but is merely representation of the selected embodiments of the present invention.

Generally, the components of the embodiments of the present invention, as described and illustrated in the figures herein, may be arranged and designed in a wide variety of different configurations.

It should be noted that similar reference numerals refer to similar items in the following figures, and thus once an item is defined in one figure, it may not be further defined or explained in the following figures.

In the following description of the present invention, it should be noted that the terms such as "up", "down", "left", "right", "middle" and "end" indicate orientation or positional relationships shown on the figures, and these terms are intended only to facilitate the description of the present invention. The term "a row of base elements" means that the said elongated components are placed in such way that the front end of one elongated component rests against the back end of the other, thereby forming an elongated component - the base - having twice the length of the single elongated component. The term "frontally connected" means that the elongated components are being connected after being positioned in the said way, i.e. consecutively. The term "a row of transversal bars" means that the transversal bars are placed parallel to each other, wherein they are aligned while forming one row. The term "length" relates to the largest dimension of the elongated component and the terms "width" and "height" are defined accordingly. The term "stiff' means not easily bent or rigid or lacking flexibility, unlike rope or string, for example.

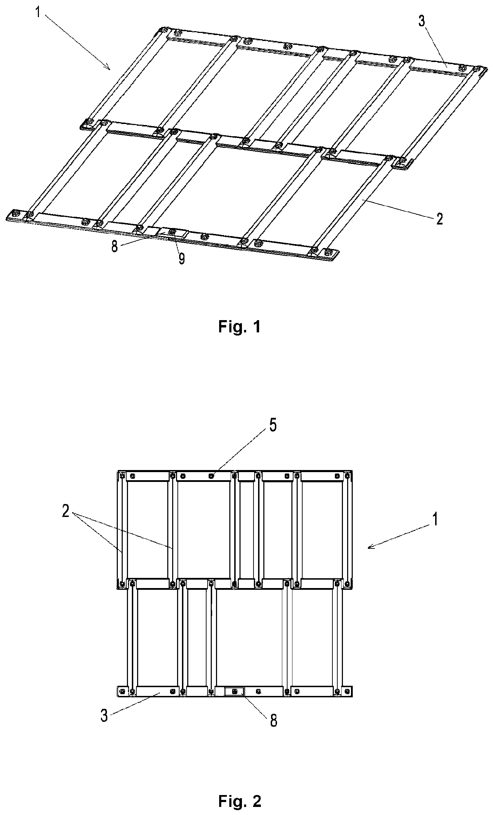

In the embodiment shown in Figs. 1 and 2, a stroller roller 1 comprises two rows of parallel transversal bars 2 placed at different distances. Stroller roller 1 further comprises three parallel rows of two mutually connected stiff elongated base elements 3 perpendicular to the transversal bars 2. The both ends of each transversal bar 2 are detachably connected with two base elements 3, each of which belongs to a different row of the base elements 3.

In the embodiment shown in Figs. 1 and 2 the detachable connection between the transversal bars 2 and the base elements 2 is the form-fit connection, although any other suitable type of detachable connection can be provided.

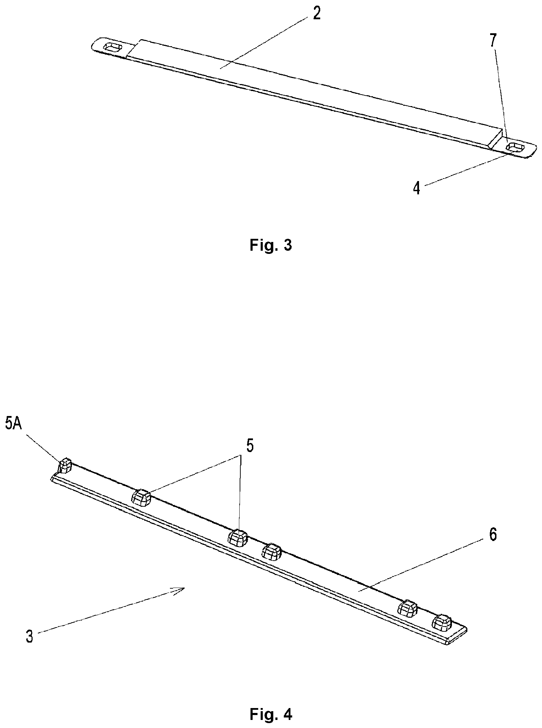

Each transversal bar 2 has got a through-hole 4 at each end thereof, as shown in Fig. 3. As shown in Fig. 4, each base element 3 has got six bulges 5 on its upper side 6. Two of the bulges 5 are located at the ends of the base element 2 and the form-fit connection between the transversal bars 2 and the base elements 2 is formed by mutual engagement of the through-holes 4 and the bulges 5. The shape of the bulges 5 is preferably approximately cubical or cuboid, while the shape of the through-holes 4 is complementary to the shape of the bulges 5. It is also conceivable that bulges 5 could have other shapes such as polygonal, which is more difficult and costly to be produced. On the other hand, cylindrical shape should be avoided due to stability issues, but it is also possible. The number of the bulges 5 can also vary.

As shown in Fig 4, the base element 3 has two groups of two adjacent bulges 5 each. One of the said groups is located at one end of the base element 3 and the other approximately in the middle of the base element 3. The base element 3 further has two remaining bulges 5 on its remaining part, wherein one of the remaining bulges 5 is located on at the very other end of the base element 3.

The remaining end bulge 5A is shorter than all other ones, wherein the length of the remaining end bulge 5A is only a half of the length of all other ones in the direction along the base element 3.

As shown in Fig. 1 and 2 the stroller roller further comprises at least one connecting part 8 having one through-hole 9 approximately in the middle thereof. The connecting part 8 is shorter than the base element 3 and the connecting part 7 is placed on the upper side of two adjoining base elements 3 of one row of the base elements 3 in such way that the adjoining remaining end bulges 5A of the said base elements 3 fit in the through-hole 9 of the connecting part 8, thereby forming a row of two mutually connected base elements 3.

It is also necessary to place one of the transversal bars 2 on the upper side of two adjoining base elements 3 of one row of the base elements 3 in such way that the adjoining remaining end bulges 5A of the said base elements 3 fit in the through-hole 4 of the transversal bar 2, thereby also forming a row two mutually connected base elements 3.

As shown in Fig. 3, the bottom of the transversal bar 2 is a flat surface and the upper side thereof is shaped as a cut out of a circle which rises in the very middle thereof, while each transversal bar 3 has a cut-out 7, preferably about 30mm long at the lower side of the both ends thereof, wherein each transversal bar 2 preferably has the following dimensions L × W × H: 350mm × 30mm × 8mm.

As shown in Fig. 4, each base element 3 is shaped as a flat, thin and elongated cuboid element, which preferably has the following dimensions L × W × H: 350mm × 30mm × 4mm.

As shown in Figs. 1 and 2, the connecting part 8 is shaped as a flat and thin cuboid element, which preferably has the following dimensions: L × W × H: 28mm × 58mm × 4mm.

In especially preferred embodiment of the invention, the base elements 3 are made of polypropylene (PP), preferably recycled PP, while the transversal bars 2 and the connecting part 8 are made of polyvinyl chloride (PVC).

In accordance with one especially preferred embodiment of the present invention, the stroller roller comprises a set of 3 different components:
a) Eleven pieces of the transversal bars 2 made of polyvinyl chloride (PVC). The mentioned transversal bars 2 have the following dimensions L × W × H: 350mm × 30mm × 8mm. While the bottom of the transversal bar 2 is a flat surface, the upper side thereof is shaped as a cut out of a circle (a circular segment in cross-section) which rises from 1 mm at the both edges to 8 mm in the very middle thereof. The transversal bar 2 has two square shaped through-holes 4 (sized 10mm × 10mm) at both ends. These through-holes 4 are used to connect the transversal bars 2 with the base elements 3. Each transversal bar 2 has a cut-out 7 (about 30mm long) at the lower side of the both ends thereof so that the transversal bar 2 fits well (i.e. without pivoting, wobbling etc.) onto a base element 3.
b) Six pieces of base (longitudinal) elements 3 made of recycled polypropylene (PP). Each of the mentioned base elements 3 is shaped as a flat, thin and elongated cuboid element having the following dimensions L × W × H: 350mm × 30mm × 4mm. Each base element 3 has six cuboid bulges 5 protruding upwards, wherein five of them are having dimensions Lx W × H: 10mm × 10mm × 8mm. The last bulge, i.e. the remaining end bulge 5A, which is located at one very end of the base element 3, preferably on the very edge thereof, is having smaller size compared with the remaining bulges 5 (L × W × H: 5mm × 10mm × 8mm), i.e. its length is only a half of the length of the remaining bulges 5, while the remaining dimensions are the same. Two such smaller bulges 5A of the adjoining base elements 3, when contacting each other, have the same length as the remaining bulges 5 and therefore are used to connect two adjoining base elements 3 into a 700mm long base by means of the connecting part 8 or one of the transversal bars 2 being put onto them.
c) One connecting part 8 made of polyvinyl chloride. The mentioned connecting part 8 is a flat and thin cuboid element having the following dimensions: L × W × H 28mm × 58mm × 4mm. This connecting part 8 has a square shaped through-hole 9 in the middle (sized 10mm × 10mm, i.e. it has the same size as the through-holes 4 in the transversal bars 3). This through-hole 9 is used to connect two base elements 2 into one 700mm long base.

The stroller roller is assembled by placing the base elements 3 on the floor in three parallel rows by putting and connecting each two base elements 3 frontally. Then the transversal bars 2 are placed on top of the base elements 3 by fitting the bulges 5 on the base elements 3 into the through-holes 4 in the transversal bars 2. Each transversal bar 2 is used to connect together two base elements 3, except one of the transversal bars 2 which is placed on the contact point of the two adjoining base elements 3, where the half sized remaining end bulges 5A are located, and thereby connecting them. That is done on the two rows of the base elements 3, but on the third one the connecting part 8 is used for the same purpose of connecting the base elements 3. All other transversal bars 2 except the said one can be placed randomly on the free bulges 5 of the base elements 3. The user can also chose to use fewer components, i.e. not all of them if that works better for him. After finishing assembly of the stroller roller the user can roll baby's stroller back and forth over the transversal bars until the baby falls asleep. Of course driving should be light and constant.

The above described embodiments are merely preferred embodiments of the present invention and are not intended to limit the scope of the present disclosure. Any equivalent changes or modifications of the present disclosure can be made without departing from the scope of the appended claims.

## Claims

1. A stroller roller (1) comprising at least two rows of parallel transversal bars (2) placed at different distances, **characterized in that** the stroller roller further comprises at least three parallel rows of at least two frontally connected stiff elongated base elements (3) perpendicular to the transversal bars (2), wherein the both ends of each transversal bar (2) are detachably connected with two base elements (3), each of which belongs to a different row of the base elements (3).

2. The stroller roller in accordance with claim 1, **characterized in that** the detachable connection between the transversal bars (2) and the base elements (2) is the form-fit connection.

3. The stroller roller in accordance with claim 1 or 2, **characterized in that** each transversal bar (2) has got a through-hole (4) at each end thereof, while each base element (3) has got at least three bulges (5), preferably six, on its upper side (6), wherein two of the bulges (5) are located at the ends of the base element (2) and the form-fit connection between the transversal bars (2) and the base elements (2) is formed by mutual engagement of the through-holes (4) and the bulges (5).

4. The stroller roller in accordance with claim 3, the **characterized in that** the shape of the bulges (5) is preferably approximately cubical or cuboid, while the shape of the through-holes (4) is complementary to the shape of the bulges (5).

5. The stroller roller in accordance with claim 3 or 4, the **characterized in that** the base element (3) has two groups of two adjacent bulges (5) each, wherein one of the groups is located at one end of the base element (3) and the other approximately in the middle of the base element (3), while the base element (3) further has two remaining bulges (5) on its remaining part, wherein one of the remaining bulges (5) is located on at the very other end of the base element (3).

6. The stroller roller in accordance with claim 5, **characterized in that** the remaining end bulge (5A) is shorter than all other ones, wherein the length of the remaining end bulge (5A) is only a half of the length of all other ones in the direction along the base element (3).

7. The stroller roller in accordance with any of the claims 3-6, **characterized in that** it further comprises at least one connecting part (8) having one through-hole (9) approximately in the middle thereof, wherein the connecting part (8) is shorter than the base element (3) and the connecting part (7) is placed on the upper side of two adjoining base elements (3) of one row of the base elements (3) in such way that the adjoining remaining end bulges (5A) of the said base elements (3) fit in the through-hole (9) of the connecting part (8), thereby forming a row of two frontally connected base elements (3).

8. The stroller roller in accordance with any of the claims 3-7, **characterized in that** one of the transversal bars (2) is placed on the upper side of two adjoining base elements (3) of one row of the base elements (3) in such way that the adjoining remaining end bulges (5A) of the said base elements (3) fit in the through-hole (4) of the transversal bar (2), thereby forming a row of two frontally connected base elements (3).

9. The stroller roller in accordance with any of the previous claims, **characterized in that** the bottom of the transversal bar (2) is a flat surface and the upper side thereof is shaped as a cut out of a circle which rises in the very middle thereof, while each transversal bar (3) has a cut-out (7), preferably about 30mm long at the lower side of the both ends thereof, wherein each transversal bar (2) preferably has the following dimensions L × W × H: 350mm × 30mm × 8mm.

10. The stroller roller in accordance with any of the previous claims, **characterized in that** each base element (3) is shaped as a flat, thin and elongated cuboid element, which preferably has the following dimensions L × W × H: 350mm × 30mm × 4mm.

11. The stroller roller in accordance with claims 7-10, **characterized in that** the connecting part (8) is shaped as a flat and thin cuboid element, which preferably has the following dimensions: L × W × H: 28mm × 58mm × 4mm.

12. The stroller roller in accordance with any of the previous claims, **characterized in that** the base elements (3) are made of polypropylene (PP), preferably recycled PP.

13. The stroller roller in accordance with any of the previous claims, **characterized in that** the transversal bars (2) are made of polyvinyl chloride (PVC).

14. The stroller roller in accordance with any of the previous claims, **characterized in that** the connecting part (8) is made of polyvinyl chloride (PVC).

15. The stroller roller in accordance with claims 7-14, **characterized in that** it preferably comprises a set of eleven transversal bars (2), six base elements (3) and one connecting part (8).
